# EUROPEAN PATENT APPLICATION

(11) **EP 4 345 728 A1**
(43) Date of publication of application: **03.04.2024**
(21) Application number: 23169513.1
(22) Date of filing: 24.04.2023
(51) Int. Cl.: G06Q 40/04

(54) **METHOD FOR PROVIDING STABLECOIN SERVICES OVER THE BLOCKCHAIN NETWORK AND BLOCKCHAIN SYSTEM USING THE SAME**

(30) Priority: 29.09.2022 KR 20220124750
(71) Applicant: Wemade Co., Ltd., Seongnam-si, Gyeonggi-do 13493 (KR)
(72) Inventor: SONG, Moheon, 06547 Seoul (KR)
(74) Representative: Klunker IP Patentanwälte PartG mbB

(57) **Abstract**

A method for providing stablecoin services over the blockchain network is provided. The method includes steps of: (a) issuing n*m second-type stablecoins to thereby supply them to liquidity pool; and (b) instructing stabilizer to withdraw j first-type stablecoins from treasury electronic wallet to stabilizer electronic wallet, exchange the withdrawn j first-type stablecoins for j*i second-type stablecoins according to exchange ratio i, and burn the j*m second-type stablecoins, or issue k second-type stablecoins to the stabilizer electronic wallet through minter, and exchange the issued k second-type stablecoins for k/i first-type stablecoins according to exchange ratio i, and to stake j*li-ml second-type stablecoins to the stabilizer electronic wallet, or deposit k/i first-type stablecoins into the treasury electronic wallet, issue k*|1/i-1/m|*m second-type stablecoins to the stabilizer electronic wallet through the minter, stake the issued k*|1/i-1/m|*m second-type stablecoins to the stabilizer electronic wallet.

## Description

The present disclosure relates to a method for providing stablecoin services over a blockchain network and a blockchain system using the same; and more particularly, to the method for providing stablecoin services capable of allowing stablecoins to be reliably collateralized by a reserve fund for payment, and the system using the same.

Various cryptocurrencies are being developed based on a blockchain technology, and cryptocurrencies such as coins constituting an independent ecosystem with its own main network and without being dependent on a different platform are used in payment or services.

However, the coins based on such cryptocurrencies have considerable price volatility, and there are even coins with price rising in multiples and falling in fractions over a short period of time. Even the Bitcoin with relatively less price volatility has a price fluctuation of about 10% up and down in a day, in severe cases.

In case of investing in coins based on such cryptocurrencies, there are many risks due to unpredictable price fluctuation. It is usually required to maintain price stability of the cryptocurrencies in domestic transactions, but if a stable value is assured without being affected by rapid price volatility and fees, etc. even in foreign transactions such as exports and remittances, the coins based on the cryptocurrencies can be more widely used.

Due to such a need, stablecoins with almost no change in price appeared, and in order to maintain the price of the cryptocurrency constantly, the stablecoins are collateralized by a legal currency or other cryptocurrency, or adjusting the supply thereof by exquisite algorithm.

However, the stablecoins collateralized by a legal currency may maintain their prices stably by associating the value with the cryptocurrency, i.e., the stablecoins, with the value of the legal currency, but enough legal currency must be reserved in order to afford the supply of the cryptocurrency, and thus the matter of scale occurs for operating the network, and it is also difficult to confirm whether the amount of the legal currency corresponding to the supply of the cryptocurrency has actually been reserved.

In addition, the stablecoins collateralized by cryptocurrency may be provided according to a fixed ratio after the stablecoins are collateralized by a predetermined amount of cryptocurrency instead of associating its value with the legal currency, but has a problem that the value of the cryptocurrency provided as a collateral may fluctuate depending on the change in the entire cryptocurrency market.

In addition, algorithm-based stablecoins maintain the price constantly in the manner of continuously adjusting the supply thereof depending on the demand, but because there is no collateralization, there must be a high degree of reliability for the system. However, in case the reliability for the system is low, such as the recent Terra-Luna incident, investors do not invest in the algorithm-based stablecoins, and accordingly, there is a problem of the stablecoins not functioning properly.

Accordingly, an inventor of the present invention proposes a solution to provide stablecoins fully collateralized by a reserve fund for payment.

It is an object of the present disclosure to solve all the aforementioned problems.

It is another object of the present disclosure to provide reliable stablecoins collateralized by another stablecoin corresponding to a riskless asset.

It is still another object of the present disclosure to allow the total number of another stablecoin provided as a collateral and the total number of the issued stablecoins to be maintained according to the collateralization ratio.

It is still yet another object of the present disclosure to allow purchasing stablecoins in distribution and burning the purchased stablecoins by using collateralized stablecoins, or minimizing price volatility of the stablecoins by further issuing stablecoins to be collateralized by another stablecoin.

In accordance with one aspect of the present disclosure, there is provided a method for providing stablecoin services over the blockchain network, comprising steps of: (a) in response to depositing n first-type stablecoins corresponding to at least one riskless asset into a treasury electronic wallet from a service managing node, a blockchain system issuing n*m second-type stablecoins to a managing node electronic wallet, wherein the n*m second-type stablecoins are collateralized by the first-type stablecoins by a preset collateralization ratio m through a minter, and wherein the managing node electronic wallet is interlocked with the service managing node, to thereby instruct the service managing node to supply at least part in number of the n*m second-type stablecoins to a liquidity pool in which exchanges between the first-type stablecoins and the second-type stablecoins are made and thus provide liquidity of the second-type stablecoins; and (b) in response to an exchange value fluctuation ratio which represents a degree of change in an exchange ratio i of the second-type stablecoins to the first-type stablecoins in the liquidity pool from the collateralization ratio m becoming a preset first threshold ratio or more, the blockchain system instructing the stabilizer to (i) (i-1) withdraw the j first-type stablecoins from the treasury electronic wallet to a stabilizer electronic wallet interlocked with the stabilizer, exchange the withdrawn j first-type stablecoins for j*i second-type stablecoins according to the exchange ratio i in the liquidity pool, and burn the j*m second-type stablecoins among the exchanged j*i second-type stablecoins such that the exchange value fluctuation ratio becomes a preset second threshold ratio or less which is less than the first threshold ratio, or (i-2) issue the k second-type stablecoins to the stabilizer electronic wallet through the minter, and exchange the issued k second-type stablecoins for k/i first-type stablecoins according to the exchange ratio i in the liquidity pool such that the exchange value fluctuation ratio becomes the second threshold ratio or less which is less than the first threshold ratio, and to (ii) (ii-1) stake j*li-ml second-type stablecoins to the stabilizer electronic wallet such that a total number of the first-type stablecoins deposited into the treasury electronic wallet and a total number of the second-type stablecoins issued through the minter are equivalently maintained according to the collateralization ratio m, or (ii-2) deposit k/i first-type stablecoins into the treasury electronic wallet, issue k*|1/i-1/m|*m second-type stablecoins to the stabilizer electronic wallet through the minter, stake the issued k*|1/i-1/m|*m second-type stablecoins to the stabilizer electronic wallet such that the total number of the first-type stablecoins deposited into the treasury electronic wallet and the total number of the second-type stablecoins issued through the minter are equivalently maintained according to the collateralization ratio m.

There may be provided that, at the step of (b), (i) in response to the exchange ratio i being greater than the collateralization ratio m, the blockchain system instructing the stabilizer to (i-1) perform a first process of withdrawing one first-type stablecoin from the treasury electronic wallet, exchanging said one first-type stablecoin for 1*i second-type stablecoins according to the exchange ratio i in the liquidity pool, and burning 1*m second-type stablecoins among the exchanged 1*i second-type stablecoins through the minter, (i-2) perform a second process of staking 1*|i-m| second-type stablecoins to the stabilizer electronic wallet, wherein the 1*|i-m| second-type stablecoins have not been burnt and the stabilizer electronic wallet corresponds to the stabilizer, and confirming updated exchange ratio of the second-type stablecoins to the first-type stablecoins in the liquidity pool, and (i-3) repeat performing of the first process and the second process according to the updated exchange ratio until the exchange value fluctuation ratio becomes the second threshold ratio or less, (ii) in response to the exchange ratio i being less than the collateralization ratio m, the blockchain system instructing the stabilizer to (ii-1) perform a third process of issuing one second-type stablecoin to the stabilizer electronic wallet through the minter, and exchanging said one second-type stablecoin for 1/i first stablecoins according to the exchange ratio i in the liquidity pool, and (ii-2) perform a fourth process of depositing the 1/i first-type stablecoins into the treasury electronic wallet, issuing |1/i-1/m|*m second-type stablecoins to the stabilizer electronic wallet through the minter, staking the issued |1/i-1/m|*m second-type stablecoins to the stabilizer electronic wallet, and confirming updated exchange ratio of the second-type stablecoins for the first-type stablecoins in the liquidity pool, and (ii-3) repeat performing of the third process and the fourth process according to the updated exchange ratio until the exchange value fluctuation ratio becomes the second threshold ratio or less.

The method may further comprise a step of: (c) in response to the exchange value fluctuation ratio becoming a third threshold ratio or more which is greater than the first threshold ratio, the blockchain system (i) blocking accesses to the liquidity pool by entities who are going to perform exchange between the first-type stablecoins and the second-type stablecoins, (ii) allowing the access to the liquidity pool only to the stabilizer, thereby instructing the stabilizer to perform, on condition that total liquidity of the first-type stablecoins and the second-type stablecoins in the liquidity pool is maintained through an automated market operation, exchanges between the first-type stablecoins and the second-type stablecoins are performed until the exchange ratio of the second-type stablecoins to the first-type stablecoins in the liquidity pool becomes the collateralization ratio, and (iii) when the exchange ratio becomes the collateralization ratio, allowing the access to the liquidity pool by the entities.

The method may further comprise a step of: (d) in response to transmitting p first-type stablecoins to the treasury electronic wallet from at least one service managing partner node to which deposit of the first-type stablecoins into the treasury electronic wallet is allowed, the blockchain system (i) instructing a treasury corresponding to the treasury electronic wallet to confirm an access authorization of the service managing partner node or confirm whether the transmission of the first-type stablecoins by the service managing partner node is valid by a multi-sig verification and thus confirm whether the service managing partner node is an authorized entity for depositing of the first-type stablecoins into the treasury electronic wallet, (ii) in response to confirming that the service managing partner node is an authorized entity for depositing of the first-type stablecoins into the treasury electronic wallet, depositing the p first-type stablecoins into the treasury electronic wallet, and (iii) instructing the minter to issue p*m second-type stablecoins corresponding to the p first-type stablecoins to a managing partner node electronic wallet corresponding to the service managing partner node.

The first-type stablecoins may be issued by the blockchain system, or may be transmitted to the managing node electronic wallet through a blockchain bridge from a sidechain for providing a service of the first-type stablecoins.

There may be provided that, at the step of (a), the blockchain system instructs the service managing node to provide the at least part in number of the second-type stablecoins to the liquidity pool and at the same time, provide a corresponding number of the first-type stablecoins corresponding to the at least part in number of the second-type stablecoins to the liquidity pool according to the collateralization ratio.

The method may further comprise a step of: (e) the blockchain system instructing the stabilizer to provide at least part of the second-type stablecoins staked to the stabilizer electronic wallet to a reward pool, and thereby instructing the reward pool to provide at least part of the second-type stablecoins transmitted from the stabilizer as a reward.

The liquidity pool may be a decentralized distribution exchange located in an independent blockchain platform in which the blockchain network is implemented.

According to another example of the present invention, a blockchain system for providing stablecoin services over the blockchain network, comprising: a blockchain network including plurality of blockchain nodes; a treasury for depositing first-type stablecoins corresponding to at least one riskless asset by performing a first preset operation on the blockchain network; a minter, in response to depositing n first-type stablecoins into a treasury electronic wallet from a service managing node, for issuing n*m second-type stablecoins to a managing node electronic wallet, wherein the n*m second-type stablecoins are collateralized by the first-type stablecoins by a preset collateralization ratio m, to thereby instruct the service managing node to supply at least part in number of the n*m second-type stablecoins to a liquidity pool in which exchanges between the first-type stablecoins and the second-type stablecoins are made and thus provide liquidity of the second-type stablecoins, by performing a second preset operation on the blockchain network; and a stabilizer, in response to an exchange value fluctuation ratio which represents a degree of change in an exchange ratio i of the second-type stablecoins to the first-type stablecoins in the liquidity pool from the collateralization ratio m becoming a preset first threshold ratio or more, instructed to (i) (i-1) withdraw the j first-type stablecoins from the treasury electronic wallet to a stabilizer electronic wallet, exchange the withdrawn j first-type stablecoins for j*i second-type stablecoins according to the exchange ratio i in the liquidity pool, and burn the j*m second-type stablecoins among the exchanged j*i second-type stablecoins such that the exchange value fluctuation ratio becomes a preset second threshold ratio or less which is less than the first threshold ratio, or (i-2) issue the k second-type stablecoins to the stabilizer electronic wallet through the minter, and exchange the issued k second-type stablecoins for k/i first-type stablecoins according to the exchange ratio i in the liquidity pool such that the exchange value fluctuation ratio becomes the second threshold ratio or less which is less than the first threshold ratio, and to (ii) (ii-1) stake j*li-ml second-type stablecoins to the stabilizer electronic wallet such that a total number of the first-type stablecoins deposited into the treasury electronic wallet and a total number of the second-type stablecoins issued through the minter are equivalently maintained according to the collateralization ratio m, or (ii-2) deposit k/i first-type stablecoins into the treasury electronic wallet, issue k*|1/i-1/m|*m second-type stablecoins to the stabilizer electronic wallet through the minter, stake the issued k*|1/i-1/m|*m second-type stablecoins to the stabilizer electronic wallet such that the total number of the first-type stablecoins deposited into the treasury electronic wallet and the total number of the second-type stablecoins issued through the minter are equivalently maintained according to the collateralization ratio m, by performing a third preset operation on the blockchain network.

There may be that, (i) in response to the exchange ratio i being greater than the collateralization ratio m, the stabilizer is instructed to (i-1) perform a first process of withdrawing one first-type stablecoin from the treasury electronic wallet, exchanging said one first-type stablecoin for the 1*i second-type stablecoins according to the exchange ratio i in the liquidity pool, and burning 1*m second-type stablecoins among the exchanged 1*i second-type stablecoins through the minter, (i-2) perform a second process of staking 1*li-ml second-type stablecoins to the stabilizer electronic wallet, wherein the 1*li-ml second-type stablecoins have not been burnt and the stabilizer electronic wallet corresponds to the stabilizer, and confirming updated exchange ratio of the second-type stablecoins to the first-type stablecoins in the liquidity pool, and (i-3) repeat performing of the first process and the second process according to the updated exchange ratio until the exchange value fluctuation ratio becomes the second threshold ratio or less, (ii) in response to the exchange ratio i being less than the collateralization ratio m, the stabilizer is instructed to (ii-1) perform a third process of issuing one second-type stablecoin to the stabilizer electronic wallet through the minter, and exchanging said one second-type stablecoin for 1/i first stablecoins according to the exchange ratio i in the liquidity pool, and (ii-2) perform a fourth process of depositing the 1/i first-type stablecoins into the treasury electronic wallet, issuing |1/i-1/m|*m second-type stablecoins to the stabilizer electronic wallet through the minter, staking the issued |1/i-1/m|*m second-type stablecoins to the stabilizer electronic wallet, and confirming updated exchange ratio of the second-type stablecoins for the first-type stablecoins in the liquidity pool, and (ii-3) repeat performing of the third process and the fourth process according to the updated exchange ratio until the exchange value fluctuation ratio becomes the second threshold ratio or less.

There may be that, in case the exchange value fluctuation ratio becomes a third threshold ratio or more which is greater than the first threshold ratio, and thus accesses of entities who are going to perform exchange between the first-type stablecoins and the second-type stablecoins to the liquidity pool are blocked and an access of only the stabilizer to the liquidity pool is allowed, on condition that total liquidity of the first-type stablecoins and the second-type stablecoins in the liquidity pool is maintained through an automated market operation, the stabilizer is instructed to perform exchanges between the first-type stablecoins and the second-type stablecoins until the exchange ratio of the second-type stablecoins to the first-type stablecoins in the liquidity pool becomes the collateralization ratio.

There may be that, (i) in response to transmitting p first-type stablecoins to the treasury electronic wallet from at least one service managing partner node to which deposit of the first-type stablecoins into the treasury electronic wallet is allowed, the treasury is instructed to confirm an access authorization of the service managing partner node or confirm whether the transmission of the first-type stablecoins by the service managing partner node is valid by the multi-sig verification and thus confirm whether the service managing partner node is an authorized entity for depositing of the first-type stablecoins into the treasury electronic wallet, and (ii) in response to confirming that the service managing partner node is an authorized entity for depositing of the first-type stablecoins into the treasury electronic wallet, the treasury is instructed to deposit the p first-type stablecoins into the treasury electronic wallet, and wherein the minter is instructed to issue p*m second-type stablecoins corresponding to the p first-type stablecoins to a managing partner node electronic wallet interlocked with the service managing partner node.

The first-type stablecoins may be issued by the blockchain system, or may be transmitted to the managing node electronic wallet through the blockchain bridge from a sidechain for providing a service of the first-type stablecoins.

The minter may instruct the service managing node to provide the at least part in number of the second-type stablecoins to the liquidity pool and at the same time, provide a number of the first-type stablecoins corresponding to the at least part in number of the second-type stablecoins to the liquidity pool according to the collateralization ratio.

The stabilizer may be instructed to provide at least part of the second-type stablecoins staked to the stabilizer electronic wallet to a reward pool, and thereby instructing the reward pool to provide at least part of the second-type stablecoins transmitted from the stabilizer as a reward.

The liquidity pool may be a decentralized distribution exchange located in an independent blockchain platform in which the blockchain network is implemented.

In addition, recordable media that are readable by a computer for storing a computer program to execute the method of the present disclosure is further provided.

The above and other objects and features of the present disclosure will become apparent from the following description of preferred embodiments given in conjunction with the accompanying drawings. The accompanying drawings used to explain example embodiments of the present disclosure are only part of example embodiments of the present disclosure and other drawings can be obtained based on the drawings by those skilled in the art of the present disclosure without inventive work.
Fig. 1 is a drawing schematically illustrating a blockchain system for providing stablecoin services over the blockchain network in accordance with one example embodiment of the present disclosure.
Fig. 2 to Fig. 4 are drawings schematically illustrating a method for providing stablecoin services over the blockchain network in accordance with one example embodiment of the present disclosure.

The following detailed description of the present disclosure refers to the accompanying drawings, which show by way of illustration a specific embodiment in which the present disclosure may be practiced, in order to clarify the objects, technical solutions and advantages of the present disclosure. These embodiments are described in sufficient detail to enable those skilled in the art to practice the present disclosure. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

To allow those skilled in the art to carry out the present disclosure easily, the example embodiments of the present disclosure will be explained by referring to attached diagrams in detail as shown below.

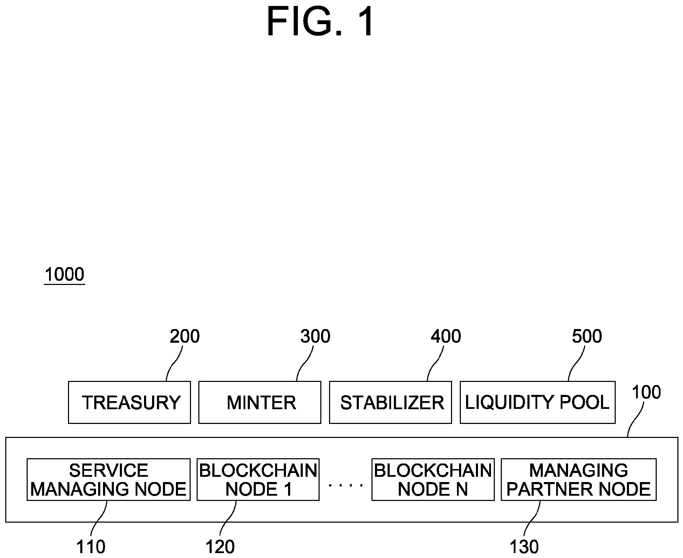

Fig. 1 is a drawing schematically illustrating a blockchain system for providing stablecoin services over the blockchain network in accordance with one example embodiment of the present disclosure. Referring to Fig. 1, a blockchain system 1000 of the present disclosure may include a blockchain network 100, a treasury 200, a minter 300 and a stabilizer 400. In addition, the blockchain system 1000 may further include a liquidity pool 500.

Firstly, the blockchain network 100 may generate blocks through a distributed consensus in the manner of P2P (peer-to-peer) by a plurality of blockchain nodes 120, and record the generated blocks in a distributed ledger by connecting them in a chain.

Next, in response to transmitting first-type stablecoins corresponding to at least one riskless asset, the treasury 200 may deposit the transmitted first-type stablecoins into a treasury electronic wallet by performing a preset operation on the blockchain network.

In addition, the treasury 200 may generate a deposit result transaction including result information that the transmitted first-type stablecoins are deposited into the treasury electronic wallet, and broadcast it to the blockchain network 100. Accordingly, after generating a block containing the deposit result transaction through distribution consensus of the blockchain nodes 120, the blockchain nodes 120 may register the block in a distributed ledger.

Herein, the treasury 200 may be implemented as the blockchain node capable of performing an operation for depositing the first-type stablecoins over the blockchain network 100, or implemented as a smart contract capable of performing the operation for depositing the first-type stablecoins in a virtual machine over the blockchain network 100.

Next, in response to depositing n first-type stablecoins into a treasury electronic wallet from a service managing node 110, the minter 300 may issue n*m second-type stablecoins to a managing node electronic wallet interlocked with the service managing node 110 by performing a preset operation on the blockchain network 100, wherein the n*m second-type stablecoins are collateralized by the first-type stablecoins by a preset collateralization ratio m, to thereby instruct the service managing node 110 to supply at least part in number of the n*m second-type stablecoins to a liquidity pool 500 in which exchanges between the first-type stablecoins and the second-type stablecoins are made and thus provide liquidity of the second-type stablecoins.

Herein, the minter 300 may be implemented as a blockchain node capable of performing an operation for issuing and burning second-type stablecoins over a blockchain network 100, or implemented as a smart contract capable of performing an operation for issuing and burning second-type stablecoins in a virtual machine over a blockchain network 100.

Next, in response to an exchange value fluctuation ratio which represents a degree of change in an exchange ratio i of the second-type stablecoins to the first-type stablecoins in the liquidity pool 500 from the collateralization ratio m becoming a preset first threshold ratio or more, the stabilizer 400 is instructed to (i) (i-1) withdraw j first-type stablecoins from the treasury electronic wallet to a stabilizer electronic wallet, exchange the withdrawn j first-type stablecoins for j*i second-type stablecoins according to the exchange ratio i in the liquidity pool 500, and burn the j*m second-type stablecoins among exchanged j*i second-type stablecoins such that the exchange value fluctuation ratio becomes a preset second threshold ratio or less which is less than the first threshold ratio, or (i-2) issue the k second-type stablecoins to the stabilizer electronic wallet through the minter 300, and exchange the issued k second-type stablecoins for k/i first-type stablecoins according to the exchange ratio i in the liquidity pool 500 such that the exchange value fluctuation ratio becomes the second threshold ratio or less which is less than the first threshold ratio. Herein, the meaning of "the exchange ratio i of the second-type stablecoins to the first-type stablecoins from the collateralization ratio m becoming a preset first threshold ratio or more" may include not only a case where "exchange value" increases by a (1_1)-st threshold ratio or more compared to a pegging state, but also a case where "exchange value" decreases to a (1_2)-nd threshold ratio or more compared to the pegging state. However, for convenience of explanation, the (1_1)-st threshold ratio and the (1_2)-nd threshold ratio are mentioned as a 1-st threshold ratio by performing a preset operation on the blockchain network 100.

In addition, the stabilizer 400 may be instructed to (ii) (ii-1) stake j*li-ml second-type stablecoins to the stabilizer electronic wallet such that the total number of the first-type stablecoins deposited into the treasury electronic wallet and the total number of the second-type stablecoins issued through the minter 300 are equivalently maintained according to the collateralization ratio m, or (ii-2) deposit k/i first-type stablecoins into the treasury electronic wallet, issue k*|1/i-1/m|*m second-type stablecoins to the stabilizer electronic wallet through the minter 300, stake the issued k*|1/i-1/m|*m second-type stablecoins to the stabilizer electronic wallet such that the total number of the first-type stablecoins deposited into the treasury electronic wallet and the total number of the second-type stablecoins issued through the minter 300 are equivalently maintained according to the collateralization ratio m.

Herein, the stabilizer 400 may be implemented as the blockchain node capable of performing operations that control the liquidity of the second-type stablecoins over the blockchain network 100 to thereby maintain the price of the second-type stablecoins stably, and that allow the total number of the first-type stablecoins provided as a collateral and the total number of the second-type stablecoins issued to be equivalently maintained according to the collateralization ratio, or as a smart contract capable of performing operations that control the liquidity of the second-type stablecoins in a virtual machine over the blockchain network 100 to thereby maintain the price of the second-type stablecoins stably, and that allow the total number of the first-type stablecoins provided as a collateral and the total number of the second-type stablecoins issued to be equivalently maintained according to the collateralization ratio.

Meanwhile, the liquidity pool 500 may be a decentralized distribution exchange located in an independent blockchain platform, that is, a main network, in which the blockchain network is implemented, and through atomic swap, entities may be allowed to exchange the first-type stablecoins and the second-type stablecoins.

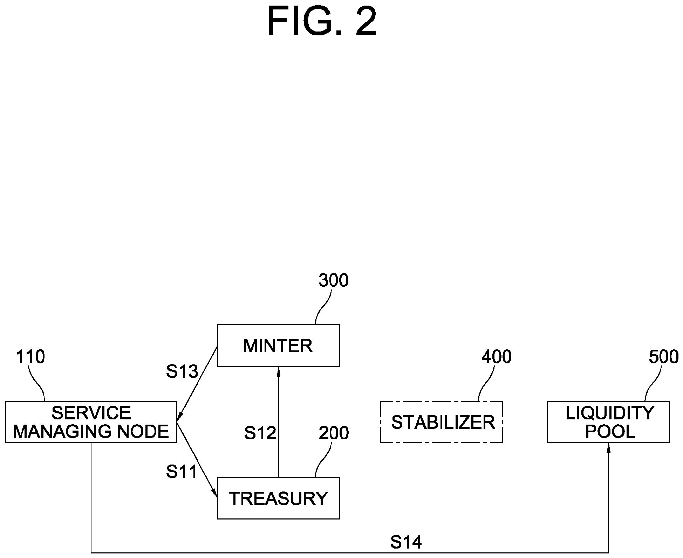

By referring to Fig. 2 to Fig. 4, a method for providing stablecoin services over the blockchain network through the blockchain system 1000 in accordance with one example embodiment of the present disclosure configured as such may be explained as follows.

Firstly, by referring to Fig. 2, in order to provide the collateralization for providing the stablecoin services, the service managing node 110 may transmit n first-type stablecoins corresponding to at least one riskless asset to the treasury 200 at the step of S11. The n may be a real number greater than 0.

Herein, the first-type stablecoins may be the cryptocurrencies issued by being collateralized by various riskless assets such as at least part of legal currency, gold, real estate, bonds and shares, etc., and may have been issued by the blockchain system over the main network, or have been transmitted to the managing node electronic wallet interlocked with the service managing node 110 managing the main network through the blockchain bridge from a sidechain for providing a service of the first-type stablecoins.

As one example, in case the first-type stablecoins that are pegged to legal currency such as Tether, USDC, TrueUSD, Gemini Dollar, Steem Dollars have been transmitted through the blockchain bridge, a specific user of the sidechain providing the service of the first-type stablecoins issued by being collateralized by at least one riskless asset may sign the first-type stablecoins with a private key and transmit the signed first-type stablecoins to multi-sig bridge. In a multi-sig manner, there are three or more private keys and signatures of two private keys among the three or more private keys are required, and thus in case they are signed with private keys held by the counterparty, the first-type stablecoins are issued in the main network and are transmitted to the service managing node. Herein, the first-type stablecoins are issued as many as the number of being verified and sent to the multi-sig bridge by a verifying entity.

Then, the blockchain system 1000 may instruct the treasury 200 to deposit n first-type stablecoins transmitted from the service managing node 100 to the treasury electronic wallet interlocked with the treasury 200.

In addition, the blockchain system 1000 may instruct the treasury 200 to transmit result information informing that the n first-type stablecoins transmitted from the service managing node 100 have been deposited into the treasury electronic wallet to the minter 300 at the step of S12.

Thereafter, the blockchain system 1000 may instruct the minter 300 to issue n*m second-type stablecoins to the managing node electronic wallet interlocked with the service managing node 110, wherein the n*m second-type stablecoins are collateralized by the first-type stablecoins by a preset collateralization ratio m at the step of S13.

In addition, the blockchain system 1000 may instruct the service managing node 110 to supply at least part in number of the n*m second-type stablecoins to the liquidity pool 500 in which exchanges between the first-type stablecoins and the second-type stablecoins are made and thus provide liquidity of the second-type stablecoins at the step of S14. Herein, the blockchain system 1000 may instruct the service managing node 110 to provide the at least part in number of the second-type stablecoins to the liquidity pool 500 and at the same time, provide the number of the first-type stablecoins corresponding to the at least part in number of the second-type stablecoins to the liquidity pool 500 according to the collateralization ratio.

As one example, in case the treasury 200 and the minter 300 are implemented as the smart contract, in response to transmitting a transaction containing execution code for operation of the treasury 200 and a transaction containing execution code for operation of the minter 300 to the blockchain network 100, the blockchain nodes 120 share each of the transactions, generate the block and then broadcast the block. Then, each of the blockchain nodes 120 may add the corresponding block to the blockchain, apply each of the transactions stored in the corresponding block, and thus synchronize own smart contract database, thereby sharing a smart contract state database. On such a condition, in response to the service managing node 110 transmitting a transaction for transmitting the n first-type stablecoins to the treasury smart contract to the blockchain network, the treasury smart contract is executed in a virtual machine of the blockchain network 100, and a transmission result transaction is generated and broadcasted to the blockchain network 100, wherein the transmission result transaction is a result of the n first-type stablecoins being transmitted to the treasury electronic wallet from the service managing node 110. Then, the blockchain nodes 120 register the block containing the transmission result transaction by a distributed consensus, thereby (i) allowing the n first-type stablecoins to be transmitted from the managing node electronic wallet to the treasury electronic wallet, and (ii) updating the number information of the first-type stablecoins deposited into the treasury electronic wallet in a smart contract status database. In addition, in response to the transmission result transaction or in response to the transaction requesting issuance of the second-type stablecoins from the treasury smart contract, a minter smart contract is executed in the virtual machine of the blockchain network 100, thereby generating n*m second-type stablecoins and transmitting the transaction for transmitting the generated n*m second-type stablecoins to the service managing node 110 to the blockchain network 100. Herein, the n*m second-type stablecoins are collateralized by the first-type stablecoins by the preset collateralization ratio m. Then, the blockchain nodes 120 register the block containing an issuance result transaction by distributed consensus, and thus (i) allowing the n*m second-type stablecoins to be transmitted to the managing node electronic wallet, and (ii) updating the issued quantity status information of the second-type stablecoins in the smart contract status database. Accordingly, the entities can confirm whether the total number of the first-type stablecoins deposited in the treasury electronic wallet and the total number of the second-type stablecoins issued by the minter are equivalently maintained according to the collateralization ratio m, thereby improving the reliability of the second-type stablecoins.

Meanwhile, the liquidity pool 500 may be a decentralized distribution exchange located in the independent blockchain platform, that is, the main network, in which the blockchain network is implemented, and through the atomic swap, the entities may be allowed to exchange the first-type stablecoins and the second-type stalbecoins. Herein, the liquidity pool 500 may be implemented as the smart contract, or as the blockchain node. Unlike this, the liquidity pool 500 may be a centralized exchange mediating the exchange between the first-type stablecoins and the second-type stablecoins, and may mediate the exchange information between the first-type stablecoins and the second-type stablecoins through the Oracle.

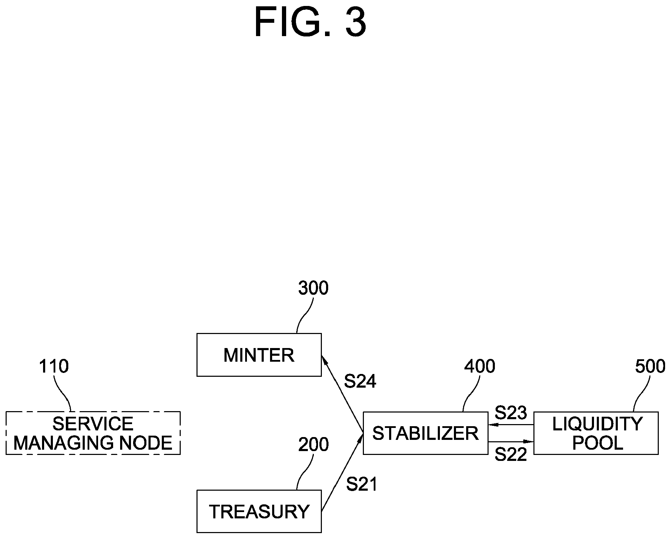

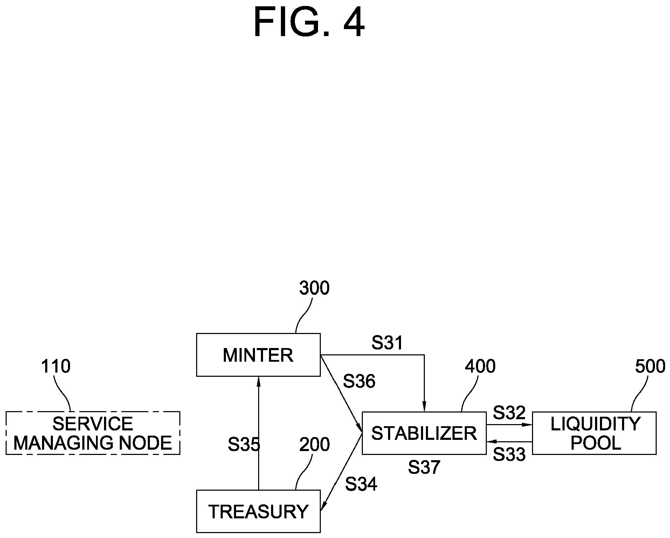

Next, referring to Fig. 3 and Fig. 4, in response to an exchange value fluctuation ratio which represents a degree of change in an exchange ratio i of the second-type stablecoins to the first-type stablecoins in the liquidity pool 500 from the collateralization ratio m becoming a preset first threshold ratio or more, the blockchain system 1000 may instruct the stabilizer 400 to (i) (i-1) withdraw the j first-type stablecoins from the treasury electronic wallet to the stabilizer electronic wallet interlocked with the stabilizer 400, exchange the withdrawn j first-type stablecoins for j*i second-type stablecoins according to the exchange ratio i in the liquidity pool 500, and burn the j*m second-type stablecoins among the exchanged j*i second-type stablecoins such that the exchange value fluctuation ratio becomes a preset second threshold ratio or less which is less than the first threshold ratio, or (i-2) issue the k second-type stablecoins to the stabilizer electronic wallet through the minter 300, and exchange the issued k second-type stablecoins for k/i first-type stablecoins according to the exchange ratio i in the liquidity pool 500 such that the exchange value fluctuation ratio becomes the second threshold ratio or less which is less than the first threshold ratio, and to (ii) (ii-1) stake j*|i-m| second-type stablecoins to the stabilizer electronic wallet such that the total number of the first-type stablecoins deposited into the treasury electronic wallet and the total number of the second-type stablecoins issued through the minter 300 are equivalently maintained according to the collateralization ratio m, or (ii-2) deposit k/i first-type stablecoins into the treasury electronic wallet, issue k*|1/i-1/m|*m second-type stablecoins to the stabilizer electronic wallet through the minter 300, and stake the issued k*|1/i-1/m|*m second-type stablecoins to the stabilizer electronic wallet such that the total number of the first-type stablecoins deposited into the treasury electronic wallet and the total number of the second-type stablecoins issued through the minter 300 are equivalently maintained according to the collateralization ratio m.

As one example, referring to Fig. 3, in case the exchange ratio i of the second-type stablecoins to the first-type stablecoins in the liquidity pool is greater than the collateralization ratio m, that is, in case the demand of the second-type stablecoins in the liquidity pool 500 decreases or the price of the second-type stablecoins falls due to malicious attack, the stabilizer 400 may stabilize the price of the second-type stablecoins through the process explained as follows.

Firstly, the stabilizer 400 may withdraw one first-type stablecoin from the treasury electronic wallet at the step of S21.

As one example, the stabilizer 400 may request a transmission of said one first-type stablecoin. Then, the treasury 200 may withdraw said one first-type stablecoin from the treasury electronic wallet and transmit said one first-type stablecoin to the stabilizer 400. Accordingly, the number of the first-type stablecoins in the treasury electronic wallet may be decreased as much as -1.

In addition, the stabilizer 400 may exchange said one first-type stablecoin for 1*i second-type stablecoins according to the exchange ratio i in the liquidity pool 500 at the steps of S22 and S23.

As one example, the stabilizer 400 may transmit said one first-type stablecoin transmitted from the treasury 200 to the liquidity pool 500 at the step of S22, and thus request the exchange of said one first-type stablecoin for the second-type stablecoins. Then, the liquidity pool 500 may transmit the 1*i second-type stablecoins to the stabilizer 400 according to the exchange ratio i of the current status at the step of S23.

Thereafter, the stabilizer 400 may allow 1*m second-type stablecoins among the exchanged 1*i second-type stablecoins to be burnt through the minter 300.

That is, in order to adjust the decreased part of the issued number of the second-type stablecoins to -1*m corresponding to the decreased part -1 of the number of the first-type stablecoins in the treasury electronic wallet, the stabilizer 400 may request burning the 1*m second-type stablecoins by transmitting the 1*m second-type stablecoins to the minter 300 at the step of S24. Then, the minter 300 may burn the 1*m second-type stablecoins transmitted from the stabilizer 400, and thus allow the total number of the issued second-type stablecoins to decrease as much as -1*m.

Herein, since the exchange ratio i is greater than the collateralization ratio m due to the fall in value of the second-type stablecoins, the stabilizer 400 may stake 1*|i-m| second-type stablecoins (i.e., second-type stablecoins which have not been burnt) into the stabilizer electronic wallet interlocked with the stabilizer 400.

In addition, the stabilizer 400 confirms updated exchange ratio of the second-type stablecoins to the first-type stablecoins in the liquidity pool 500, and thus repeatedly (i) adjusts the total number of the first-type stablecoins deposited into the treasury electronic wallet and the total number of the second-type stablecoins issued to be equivalently maintained according to the collateralization ratio m, thereby achieving a reliability of the second-type stablecoins, and at the same time, (ii) decreasing the flowing quantity of the second-type stablecoins in the liquidity pool 500 until the exchange value fluctuation ratio becomes the second threshold ratio or less, thereby stabilizing the price of the second-type stablecoins.

As another example, referring to Fig. 4, in case the exchange ratio i of the second-type stablecoins to the first-type stablecoins in the liquidity pool 500 is less than the collateralization ratio m, that is, in case the demand of the second-type stablecoins in the liquidity pool 500 increases and thus the price of the second-type stablecoins rises, the stabilizer 400 stabilizes the price of the second-type stablecoins through the process explained as follows.

Firstly, the stabilizer 400 may allow one second-type stablecoin to be issued through the minter 300 at the step of S31.

As one example, the stabilizer 400 may request an issuance of said one second-type stablecoin to the minter 300. Then, the minter 300 may generate said one second-type stablecoin and transmit said one second-type stablecoin to the stabilizer 400. Accordingly, the total number of the second-type stablecoins issued in the minter may be increased as much as +1.

In addition, the stabilizer 400 may exchange said one second-type stablecoin for 1/i first-type stablecoins according to the exchange ratio i in the liquidity pool 500 at the steps of S32 and S33.

As one example, the stabilizer 400 may transmit said one second-type stablecoin newly issued by the minter 300 to the liquidity pool 500, and thus request the exchange of said one second-type stablecoin for 1/i first-type stablecoins at the step of S32. Then, the liquidity pool 500 may transmit the 1/i first-type stablecoins to the stabilizer 400 according to the exchange ratio i of the current status of the second-type stablecoins to the first-type stablecoins at the step of S33. Herein, the exchange ratio of the second-type stablecoins to the first-type stablecoins is i, and thus the exchange ratio of the first-type stablecoins to the second-type stablecoins becomes 1/i, and accordingly, said one second-type stablecoin can be exchanged for the 1/i first-type stablecoins.

Thereafter, the stabilizer 400 may deposit the exchanged 1/i first-type stablecoins into the treasury electronic wallet at the step of S34.

In addition, in response to depositing the 1/i first-type stablecoins into the treasury electronic wallet, the minter 300 may confirm that the first-type stablecoins have been newly deposited into the treasury electronic wallet as much as +1/m corresponding to +1 of the second-type stablecoins issued at the step of S35. Herein, the exchange ratio i is less than the collateralization ratio m, that is, 1/i becomes greater than 1/m, and thus it can be confirmed that more than 1/m first-type stablecoins have been newly deposited into the treasury electronic wallet. Accordingly, in order to allow the total number of the first-type stablecoins deposited into the treasury electronic wallet and the total number of the issued second-type stablecoins to be equivalently maintained according to the collateralization ratio m, the minter 300 may allow |1/i-1/m|*m second-type stablecoins corresponding to |1/i - 1/ml first-type stablecoins to be issued to the stabilizer electronic wallet at the step of S36. Then, the stabilizer 400 may stake the issued |1/i-1/m|*m second-type stablecoins into the stabilizer electronic wallet at the step of S37.

In addition, the stabilizer 400 confirms updated exchange ratio of the second-type stablecoins to the first-type stablecoins in the liquidity pool 500, and thus repeatedly (i) adjusts the total number of the first-type stablecoins deposited into the treasury electronic wallet and the total number of the second-type stablecoins issued to be equivalently maintained according to the collateralization ratio m, thereby achieving a reliability of the second-type stablecoins, and at the same time, (ii) increasing the flowing quantity of the second-type stablecoins in the liquidity pool 500 until the exchange value fluctuation ratio becomes the second threshold ratio or less, thereby stabilizing the price of the second-type stablecoins.

Meanwhile, in the above, in response to depositing the 1/i first-type stablecoins into the treasury electronic wallet, the minter 300 has issued the |1/i-1/m|*m second-type stablecoins to the stabilizer electronic wallet, but unlike this, the stabilizer 400 may deposit 1/i first-type stablecoins into the treasury electronic wallet, and at the same time, request the minter 300 to issue |1/i-1/m|*m second-type stablecoins, and thus instruct the minter 300 to issue |1/i-1/m|*m second-type stablecoins to the stabilizer electronic wallet.

On condition that the price of second-type stablecoins has been stably maintained by the operation as above, in case the exchange value fluctuation ratio becomes a third threshold ratio or more which is greater than the first threshold ratio, that is, in case the price of the second-type stablecoins rapidly changes, the blockchain system 1000 may block accesses to the liquidity pool 500 by entities who are going to perform exchange between the first-type stablecoins and the second-type stablecoins, and allow the access to the liquidity pool 500 only to the stabilizer 400, thereby (i) instructing the stabilizer 400 to perform the exchanges between the first-type stablecoins and the second-type stablecoins until the exchange ratio of the second-type stablecoins to the first-type stablecoins in the liquidity pool 500 becomes the collateralization ratio, while total liquidity of the first-type stablecoins and the second-type stablecoins in the liquidity pool 500 is maintained through an automated market operation, and (ii) when the exchange ratio becomes the collateralization ratio or becomes close thereto, allowing the access to the liquidity pool 500 by the entities, and thus allowing the exchanges between the first-type stablecoins and the second-type stablecoins through the liquidity pool 500 by the entities.

In addition, (i) in case p first-type stablecoins are transmitted to the treasury electronic wallet from at least one service managing partner node 130 to which depositing of the first-type stablecoins into the treasury electronic wallet is allowed, the blockchain system 1000 may instruct the treasury 200 interlocked with the treasury electronic wallet to confirm an access authorization of the service managing partner node 130 or confirm whether the transmission of the first-type stablecoins by the service managing partner node 130 is valid by the multi-sig verification, thereby confirming whether the service managing partner node 130 is an authorized entity for depositing of the first-type stablecoins into the treasury electronic wallet, and (ii) in case the service managing partner node 130 is confirmed as an authorized entity for depositing of the first-type stablecoins into the treasury electronic wallet, the blockchain system 1000 may deposit the p first-type stablecoins into the treasury electronic wallet, and instruct the minter 300 to issue p*m second-type stablecoins corresponding to the p first-type stablecoins to the managing partner node electronic wallet interlocked with the service managing partner node. Accordingly, by allowing various investors to participate as managing partners based on the reliability of the second-type stablecoins provided as a service through the blockchain system 1000, it may pursue the activation of the ecosystem using the second-type stablecoins.

In addition, the blockchain system 1000 may instruct the stabilizer 400 to provide at least part of the second-type stablecoins staked to the stabilizer electronic wallet to a reward pool (not shown), and thus instruct the reward pool to provide at least part of the second-type stablecoins transmitted from the stabilizer 400 as a reward to various entities who participate in the ecosystem of the main network.

According to the present invention, there are following effects.

The present disclosure has an effect of providing reliable stablecoins collateralized by another stablecoins corresponding to a riskless asset.

The present disclosure has another effect of allowing the total number of another stablecoin provided as a collateral and the total number of the issued stablecoins to be maintained according to the collateralization ratio.

The present disclosure has still another effect of allowing purchasing stablecoins in distribution and burning the purchased stablecoins by using collateralized stablecoins, or minimizing price volatility of the stablecoins by further issuing stablecoins to be collateralized by another stablecoin.

Besides, the embodiments of the present disclosure as explained above can be implemented in a form of executable program command through a variety of computer means recordable to computer readable media. The computer readable media may store solely or in combination, program commands, data files, and data structures. The program commands recorded in the media may be components specially designed for the present disclosure or may be usable for a skilled human in a field of computer software. The computer readable media include, but are not limited to, magnetic media such as hard drives, floppy diskettes, magnetic tapes, memory cards, solid-state drives, USB flash drives, optical media such as CD-ROM and DVD, magneto-optical media such as floptical diskettes and hardware devices such as a read-only memory (ROM), a random access memory (RAM), and a flash memory specially designed to store and carry out program commands. Program commands may include not only a machine language code made by a compiler but also a high level code that can be used by an interpreter etc., which is executed by a computer. The aforementioned hardware device may work as more than a software module to perform the action of the present disclosure and they may do the same in the opposite case. The hardware device may include a processor such as a CPU or a GPU, combined with a memory device such as ROM or RAM to store the program commands, configured to execute the commands stored in the memory, and a communication part which can exchange signals with external devices. In addition, the hardware device may include a keyboard, a mouse, and any other external input device to receive commands prepared by developers.

## Claims

1. A method for providing stablecoin services over the blockchain network, comprising steps of:
(a) in response to depositing n first-type stablecoins corresponding to at least one riskless asset into a treasury electronic wallet from a service managing node, a blockchain system issuing n*m second-type stablecoins to a managing node electronic wallet, wherein the n*m second-type stablecoins are collateralized by the first-type stablecoins by a preset collateralization ratio m through a minter, and wherein the managing node electronic wallet is interlocked with the service managing node, to thereby instruct the service managing node to supply at least part in number of the n*m second-type stablecoins to a liquidity pool in which exchanges between the first-type stablecoins and the second-type stablecoins are made and thus provide liquidity of the second-type stablecoins; and
(b) in response to an exchange value fluctuation ratio which represents a degree of change in an exchange ratio i of the second-type stablecoins to the first-type stablecoins in the liquidity pool from the collateralization ratio m becoming a preset first threshold ratio or more, the blockchain system instructing the stabilizer to (i) (i-1) withdraw the j first-type stablecoins from the treasury electronic wallet to a stabilizer electronic wallet interlocked with the stabilizer, exchange the withdrawn j first-type stablecoins for j*i second-type stablecoins according to the exchange ratio i in the liquidity pool, and burn the j*m second-type stablecoins among the exchanged j*i second-type stablecoins such that the exchange value fluctuation ratio becomes a preset second threshold ratio or less which is less than the first threshold ratio, or (i-2) issue the k second-type stablecoins to the stabilizer electronic wallet through the minter, and exchange the issued k second-type stablecoins for k/i first-type stablecoins according to the exchange ratio i in the liquidity pool such that the exchange value fluctuation ratio becomes the second threshold ratio or less which is less than the first threshold ratio, and to (ii) (ii-1) stake j*li-ml second-type stablecoins to the stabilizer electronic wallet such that the total number of the first-type stablecoins deposited into the treasury electronic wallet and the total number of the second-type stablecoins issued through the minter are equivalently maintained according to the collateralization ratio m, or (ii-2) deposit k/i first-type stablecoins into the treasury electronic wallet, issue k*|1/i-1/m|*m second-type stablecoins to the stabilizer electronic wallet through the minter, stake the issued k*|1/i-1/m|*m second-type stablecoins to the stabilizer electronic wallet such that the total number of the first-type stablecoins deposited into the treasury electronic wallet and the total number of the second-type stablecoins issued through the minter are equivalently maintained according to the collateralization ratio m.

2. The method of Claim 1, wherein, at the step of (b), (i) in response to the exchange ratio i being greater than the collateralization ratio m, the blockchain system instructs the stabilizer to (i-1) perform a first process of withdrawing one first-type stablecoin from the treasury electronic wallet, exchanging said one first-type stablecoin for 1*i second-type stablecoins according to the exchange ratio i in the liquidity pool, and burning 1*m second-type stablecoins among the exchanged 1*i second-type stablecoins through the minter, (i-2) perform a second process of staking 1*|i-m| second-type stablecoins to the stabilizer electronic wallet, wherein the 1*|i-m| second-type stablecoins have not been burnt and the stabilizer electronic wallet corresponds to the stabilizer, and confirming updated exchange ratio of the second-type stablecoins to the first-type stablecoins in the liquidity pool, and (i-3) repeat performing of the first process and the second process according to the updated exchange ratio until the exchange value fluctuation ratio becomes the second threshold ratio or less,
(ii) in response to the exchange ratio i being less than the collateralization ratio m, the blockchain system instructs the stabilizer to (ii-1) perform a third process of issuing one second-type stablecoin to the stabilizer electronic wallet through the minter, and exchanging said one second-type stablecoin for 1/i first stablecoins according to the exchange ratio i in the liquidity pool, and (ii-2) perform a fourth process of depositing the 1/i first-type stablecoins into the treasury electronic wallet, issuing |1/i-1/m|*m second-type stablecoins to the stabilizer electronic wallet through the minter, staking the issued |1/i-1/m|*m second-type stablecoins to the stabilizer electronic wallet, and confirming updated exchange ratio of the second-type stablecoins for the first-type stablecoins in the liquidity pool, and (ii-3) repeat performing of the third process and the fourth process according to the updated exchange ratio until the exchange value fluctuation ratio becomes the second threshold ratio or less.

3. The method of Claim 1, further comprising a step of:
(c) in response to the exchange value fluctuation ratio becoming a third threshold ratio or more which is greater than the first threshold ratio, the blockchain system (i) blocking accesses to the liquidity pool by entities who are going to perform exchange between the first-type stablecoins and the second-type stablecoins, (ii) allowing the access to the liquidity pool only to the stabilizer, thereby instructing the stabilizer to perform, on condition that total liquidity of the first-type stablecoins and the second-type stablecoins in the liquidity pool is maintained through an automated market operation, exchanges between the first-type stablecoins and the second-type stablecoins are performed until the exchange ratio of the second-type stablecoins to the first-type stablecoins in the liquidity pool becomes the collateralization ratio, and (iii) when the exchange ratio becomes the collateralization ratio, allowing the access to the liquidity pool by the entities.

4. The method of Claim 1, further comprising a step of:
(d) in response to transmitting p first-type stablecoins to the treasury electronic wallet from at least one service managing partner node to which deposit of the first-type stablecoins into the treasury electronic wallet is allowed, the blockchain system (i) instructing a treasury corresponding to the treasury electronic wallet to confirm an access authorization of the service managing partner node or confirm whether the transmission of the first-type stablecoins by the service managing partner node is valid by a multi-sig verification and thus confirm whether the service managing partner node is an authorized entity for depositing of the first-type stablecoins into the treasury electronic wallet, (ii) in response to confirming that the service managing partner node is an authorized entity for depositing of the first-type stablecoins into the treasury electronic wallet, depositing the p first-type stablecoins into the treasury electronic wallet, and (iii) instructing the minter to issue p*m second-type stablecoins corresponding to the p first-type stablecoins to a managing partner node electronic wallet corresponding to the service managing partner node.

5. The method of Claim 1, wherein the first-type stablecoins are issued by the blockchain system, or are transmitted to the managing node electronic wallet through a blockchain bridge from a sidechain for providing a service of the first-type stablecoins.

6. The method of Claim 1, wherein, at the step of (a), the blockchain system instructs the service managing node to provide the at least part in number of the second-type stablecoins to the liquidity pool and at the same time provide a corresponding number of the first-type stablecoins corresponding to the at least part in number of the second-type stablecoins to the liquidity pool according to the collateralization ratio.

7. The method of Claim 1, further comprising a step of:
(e) the blockchain system instructing the stabilizer to provide at least part of the second-type stablecoins staked to the stabilizer electronic wallet to a reward pool, and thereby instructing the reward pool to provide at least part of the second-type stablecoins transmitted from the stabilizer as a reward.

8. The method of Claim 1, wherein the liquidity pool is a decentralized distribution exchange located in an independent blockchain platform in which the blockchain network is implemented.

9. A blockchain system for providing stablecoin services over the blockchain network, comprising:
a blockchain network including plurality of blockchain nodes;
a treasury for depositing first-type stablecoins corresponding to at least one riskless asset by performing a first preset operation on the blockchain network;
a minter, in response to depositing n first-type stablecoins into a treasury electronic wallet from a service managing node, for issuing n*m second-type stablecoins to a managing node electronic wallet, wherein the n*m second-type stablecoins are collateralized by the first-type stablecoins by a preset collateralization ratio m, to thereby instruct the service managing node to supply at least part in number of the n*m second-type stablecoins to a liquidity pool in which exchanges between the first-type stablecoins and the second-type stablecoins are made and thus provide liquidity of the second-type stablecoins, by performing a second preset operation on the blockchain network; and
a stabilizer, in response to an exchange value fluctuation ratio which represents a degree of change in an exchange ratio i of the second-type stablecoins to the first-type stablecoins in the liquidity pool from the collateralization ratio m becoming a preset first threshold ratio or more, instructed to (i) (i-1) withdraw the j first-type stablecoins from the treasury electronic wallet to a stabilizer electronic wallet, exchange the withdrawn j first-type stablecoins for j*i second-type stablecoins according to the exchange ratio i in the liquidity pool, and burn the j*m second-type stablecoins among the exchanged j*i second-type stablecoins such that the exchange value fluctuation ratio becomes a preset second threshold ratio or less which is less than the first threshold ratio, or (i-2) issue the k second-type stablecoins to the stabilizer electronic wallet through the minter, and exchange the issued k second-type stablecoins for k/i first-type stablecoins according to the exchange ratio i in the liquidity pool such that the exchange value fluctuation ratio becomes the second threshold ratio or less which is less than the first threshold ratio, and to (ii) (ii-1) stake j*li-ml second-type stablecoins to the stabilizer electronic wallet such that the total number of the first-type stablecoins deposited into the treasury electronic wallet and the total number of the second-type stablecoins issued through the minter are equivalently maintained according to the collateralization ratio m, or (ii-2) deposit k/i first-type stablecoins into the treasury electronic wallet, issue k*|1/i-1/m|*m second-type stablecoins to the stabilizer electronic wallet through the minter, stake the issued k*|1/i-1/m|*m second-type stablecoins to the stabilizer electronic wallet such that the total number of the first-type stablecoins deposited into the treasury electronic wallet and the total number of the second-type stablecoins issued through the minter are equivalently maintained according to the collateralization ratio m, by performing a third preset operation on the blockchain network.

10. The blockchain system of Claim 9, wherein, (i) in response to the exchange ratio i being greater than the collateralization ratio m, the stabilizer is instructed to (i-1) perform a first process of withdrawing one first-type stablecoin from the treasury electronic wallet, exchanging said one first-type stablecoin for 1*i second-type stablecoins according to the exchange ratio i in the liquidity pool, and burning 1*m second-type stablecoins among the exchanged 1*i second-type stablecoins through the minter, (i-2) perform a second process of staking 1*li-ml second-type stablecoins to the stabilizer electronic wallet, wherein the 1*li-ml second-type stablecoins have not been burnt and the stabilizer electronic wallet corresponds to the stabilizer, and confirming updated exchange ratio of the second-type stablecoins to the first-type stablecoins in the liquidity pool, and (i-3) repeat performing of the first process and the second process according to the updated exchange ratio until the exchange value fluctuation ratio becomes the second threshold ratio or less, (ii) in response to the exchange ratio i being less than the collateralization ratio m, the stabilizer is instructed to (ii-1) perform a third process of issuing one second-type stablecoin to the stabilizer electronic wallet through the minter, and exchanging said one second-type stablecoin for 1/i first stablecoins according to the exchange ratio i in the liquidity pool, and (ii-2) perform a fourth process of depositing the 1/i first-type stablecoins into the treasury electronic wallet, issuing |1/i-1/m|*m second-type stablecoins to the stabilizer electronic wallet through the minter, staking the issued |1/i-1/m|*m second-type stablecoins to the stabilizer electronic wallet, and confirming updated exchange ratio of the second-type stablecoins for the first-type stablecoins in the liquidity pool, and (ii-3) repeat performing of the third process and the fourth process according to the updated exchange ratio until the exchange value fluctuation ratio becomes the second threshold ratio or less.

11. The blockchain system of Claim 9, wherein, in case the exchange value fluctuation ratio becomes a third threshold ratio or more which is greater than the first threshold ratio, and thus accesses of entities who are going to perform exchange between the first-type stablecoins and the second-type stablecoins to the liquidity pool are blocked and an access of only the stabilizer to the liquidity pool is allowed, on condition that total liquidity of the first-type stablecoins and the second-type stablecoins in the liquidity pool is maintained through an automated market operation, the stabilizer is instructed to perform exchanges between the first-type stablecoins and the second-type stablecoins until the exchange ratio of the second-type stablecoins to the first-type stablecoins in the liquidity pool becomes the collateralization ratio.

12. The blockchain system of Claim 9, wherein, (i) in response to transmitting p first-type stablecoins to the treasury electronic wallet from at least one service managing partner node to which deposit of the first-type stablecoins into the treasury electronic wallet is allowed, the treasury is instructed to confirm an access authorization of the service managing partner node or confirm whether the transmission of the first-type stablecoins by the service managing partner node is valid by a multi-sig verification and thus confirm whether the service managing partner node is an authorized entity for depositing of the first-type stablecoins into the treasury electronic wallet, and (ii) in response to confirming that the service managing partner node is an authorized entity for depositing of the first-type stablecoins into the treasury electronic wallet, the treasury is instructed to deposit the p first-type stablecoins into the treasury electronic wallet, and
wherein the minter is instructed to issue p*m second-type stablecoins corresponding to the p first-type stablecoins to a managing partner node electronic wallet corresponding to the service managing partner node.

13. The blockchain system of Claim 9, wherein the first-type stablecoins are issued by the blockchain system, or are transmitted to the managing node electronic wallet through a blockchain bridge from a sidechain for providing a service of the first-type stablecoins.

14. The blockchain system of Claim 9, wherein the minter instructs the service managing node to provide the at least part in number of the second-type stablecoins to the liquidity pool and at the same time, provide a corresponding number of the first-type stablecoins corresponding to the at least part in number of the second-type stablecoins to the liquidity pool according to the collateralization ratio.

15. The blockchain system of Claim 9, wherein the stabilizer is instructed to provide at least part of the second-type stablecoins staked to the stabilizer electronic wallet to a reward pool, and thereby instructing the reward pool to provide at least part of the second-type stablecoins transmitted from the stabilizer as a reward.
